# EUROPEAN PATENT APPLICATION

(11) **EP 0 574 181 A1**
(43) Date of publication of application: **15.12.1993**
(21) Application number: 93304302.8
(22) Date of filing: 03.06.1993
(51) Int. Cl.: F02M 25/07, F01N 3/22, F01N 3/32

(54) **Internal combustion engine with secondary air circuit and exhaust gas recirculation circuit**

(30) Priority: 12.06.1992 GB 9212566
(71) Applicant: FORD MOTOR COMPANY LIMITED, Brentwood Essex (GB); FORD FRANCE S. A., F-92506 Rueil-Malmaison Cédex (FR); FORD-WERKE AKTIENGESELLSCHAFT, D-50725 Köln (DE)
(72) Inventor: Ransom, Keith, Benfleet, Essex SS7 5AS (GB)
(74) Representative: Messulam, Alec Moses

(57) **Abstract**

An internal combustion engine (10,12) has a secondary air circuit (24) which admits air to the exhaust passage (18,20) when the engine is cold, to hasten warm-up of the catalyst (22). The secondary air enters the exhaust passage through an inlet port (32). The same 'inlet' port is connected to an exhaust gas recirculation circuit (36) and serves as an 'outlet' port for exhaust gas when the secondary air circuit is not operating.

## Description

This invention relates to an internal combustion engine with an exhaust catalyst and a secondary air circuit.

Exhaust gas catalysts have a particular band of operating temperatures at which they effectively accomplish the conversion of noxious emissions to safe emissions. During normal running, the heat of the exhaust gases will ensure that the catalyst remains at its desired operating temperature. However when the engine is started from cold, it takes some time for the catalyst to achieve its operating temperature and during this period noxious emissions can be produced.

It is therefore known to provide some means for accelerating the warm-up time of the catalyst, and it is known to introduce "secondary air" into the exhaust manifold to provide additional oxygen for early combustion to achieve rapid warm-up.

Exhaust gas recirculation (EGR) is also a known technique. In an EGR system, a pipe extends between the exhaust manifold and the engine air intake. The pipe contains an EGR valve. When the valve opens, the manifold vacuum sucks exhaust gas from the exhaust manifold into the intake manifold and this also has a beneficial effect in reducing undesirable emissions.

According to the present invention there is provided an internal combustion engine having an air intake, an exhaust passage which includes an exhaust catalyst, a secondary air circuit which includes a secondary air intake, a secondary air pump and a secondary air inlet leading into the exhaust passage, all for the admission of secondary air to assist rapid achievement of operating temperature of the catalyst, and an exhaust gas recirculation circuit connected to the secondary air inlet and to the engine air intake so that exhaust gas to be recirculated flows out of the exhaust gas passage through the secondary air inlet.

The secondary air inlet may enter the exhaust passage through one or more inlet ports; in one embodiment for example there may be as many ports as there are cylinders in the engine.

As a result of the invention it is only necessary to have one set of gas entry/exit ports to/from the exhaust passage. These ports allow secondary air to flow into the engine when secondary air is called for, and at other times allow exhaust gas to be drawn out of the exhaust passage to be recirculated to the engine intake.

The invention is founded on the realisation that the secondary air circuit and the EGR circuit are never called upon to open at the same time. Therefore one set of ports can operate alternately as secondary air inlets and as exhaust gas outlets.

The secondary air inlet ports preferably lead directly into the engine exhaust manifold, and into each tract thereof.

The secondary air circuit preferably includes a check valve to prevent reverse flow of air through the secondary air circuit, and an air control valve which determines when the secondary air circuit is operating.

The EGR circuit preferably includes a pipe for connection to the engine air intake, an EGR valve and a pipe for communicating with the secondary air inlets. The latter pipe may be connected by a releasable connection to the secondary air inlet ports.

A constriction may be provided in the exhaust gas passage upstream of the EGR valve, and pressure tappings on either side of the constriction are then provided to monitor the flow of air through the EGR passage.

The invention will now be further described, by way of example, with reference to the accompanying drawings, in which:
Figure 1 is a schematic view of an engine installation in accordance with the invention; and
Figures 2 and 3 show schematically the secondary air and EGR circuit in two alternative operating conditions.

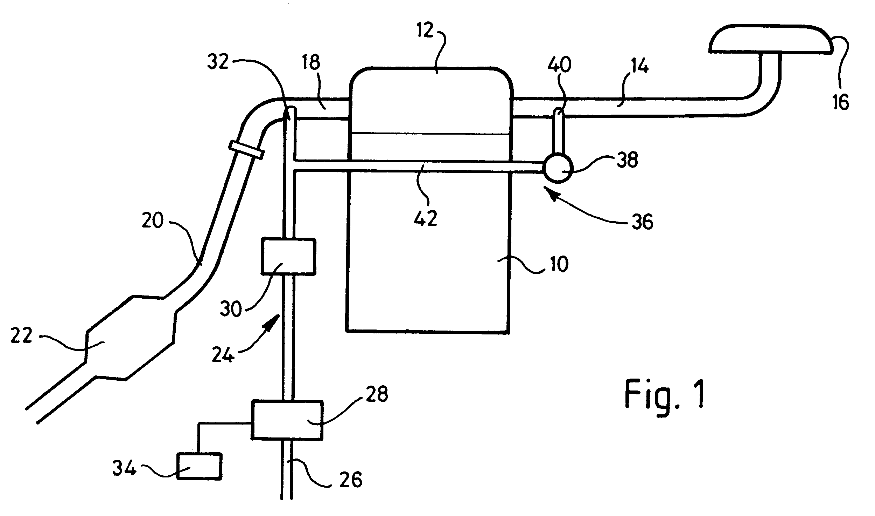

Figure 1 shows an engine block 10 with a cylinder head 12. On one side the engine has an air intake 14 which extends between an air cleaner unit 16 and the engine. On the other side the engine has an exhaust manifold 18 leading into an exhaust pipe 20 in which a catalyst 22 is fitted in a conventional way.

A secondary air circuit is indicated at 24 and comprises an air intake 26, a pump 28, a check valve 30 and a secondary air inlet 32. The pump 28 is controlled by a control module 34.

When the engine is started from cold, the control unit 34 starts the pump 28 which blows air into the exhaust manifold 18. The presence of excess oxygen in the exhaust passage causes the exhaust passage and the catalyst 22 to rapidly reach their temperature. Once this has happened the pump 28 is stopped. A check valve 30 in the secondary air circuit allows air to flow from the pump 28 to the inlet 32, but prevents flow in the reverse direction. Thus, when the pump 28 is not operating exhaust gases cannot flow through the secondary air circuit.

The engine is also provided with an EGR circuit at 36. The circuit 36 includes an EGR valve 38 which either opens or closes a passage between an air intake connection at 40 and the secondary air circuit at 24. When the pump 28 is not operating, and when the valve 38 is open, intake manifold vacuum in the air intake 14 will suck exhaust gas from the manifold 18 through the pipe 42 and into the air intake.

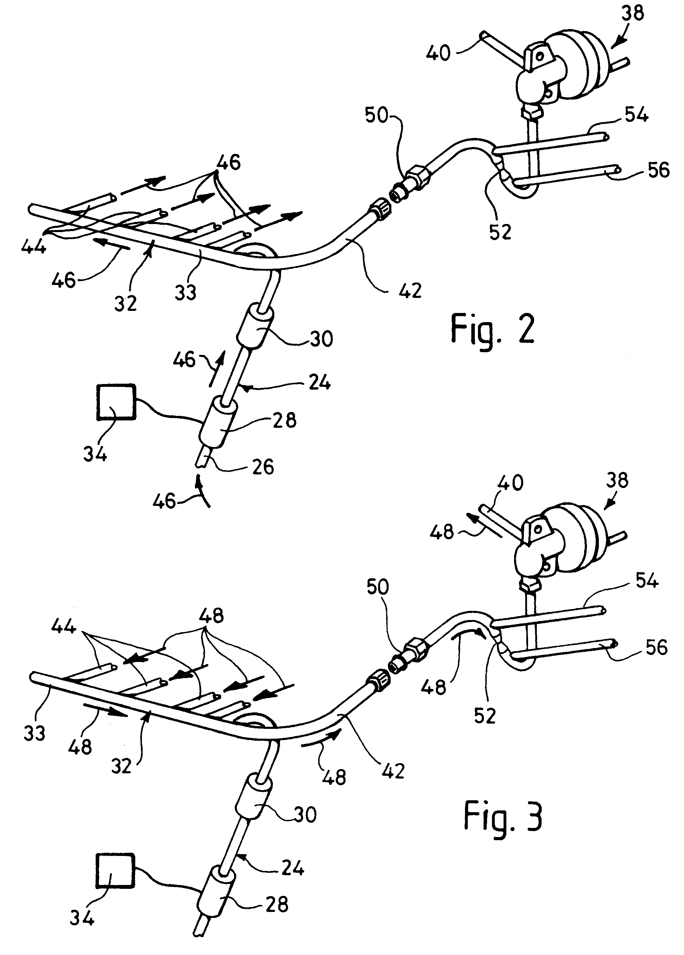

This is shown in more detail in Figures 2 and 3.

The secondary air inlet 32 comprises a manifold pipe 33 which has branches 44, each of which leads into one exhaust manifold tract. Figure 2 illustrates the situation when the EGR valve 38 is closed and when the pump 28 is operating. Secondary air flows in the direction indicated by the arrows 46, to flow into the exhaust manifold.

Figure 3 shows the opposite situation, where the EGR valve 38 is open and the pump 28 is stopped. In this situation exhaust gas flows from the secondary air branches 44 and the manifold pipe 33 to the engine air intake through the port 40, as indicated by the arrow 48. It will be seen that the flow through the branch pipes 44 and through the secondary air manifold pipe 33 is in opposite directions in the two alternative situations of Figures 2 and 3.

The EGR pipe 42 has a disconnectable coupling 50 to allow the two circuits, which are fundamentally located on opposite ends of the engine, to be connected to and disconnected from each other. The EGR pipe 42 also includes a restriction 52 with pressure sensing tappings at 54 and 56 to monitor the rate of flow through the pipe 42.

Although Figures 2 and 3 show four branch pipes 44, one for each cylinder of the engine, the interface between the secondary air inlet 32 and the manifold can be differently arranged. For example inlet ports may enter the manifold after the point at which the four (or other number) of tracts merge into one or at a point where for example four tracts may have merged into two tracts which would require only two ports leading into the manifold.

By using only one set of connections into the exhaust manifold for both secondary air and exhaust gas recirculation, a significant saving in terms of pipework and in terms of possible leak sites is achieved.

## Claims

1. An internal combustion engine having an air intake (14), an exhaust passage (20) which includes an exhaust catalyst (22), a secondary air circuit (24) which includes a secondary air intake (26), a secondary air pump (28) and a secondary air inlet (32) leading into the exhaust passage (18,20), all for the admission of secondary air to assist rapid achievement of operating temperature of the catalyst, and an exhaust gas recirculation circuit (36) characterised in that the exhaust gas recirculation circuit is connected to the secondary air inlet (32) and to the engine air intake (14) so that exhaust gas to be recirculated flows out of the exhaust gas passage through the secondary air inlet (32).

2. An internal combustion engine as claimed in Claim 1, wherein the secondary air inlet (32) enters the exhaust passage (18,20) through an inlet port or ports (44) and there are as many inlet ports as there are cylinders in the engine.

3. An internal combustion engine as claimed in Claim 1 or Claim 2, wherein the secondary air inlet ports (44) lead directly into the engine exhaust manifold(18), and into each tract thereof.

4. An internal combustion engine as claimed in any preceding claim, wherein the secondary air circuit (24) includes a check valve (30) to prevent reverse flow of air through the secondary air circuit, and an air control module (34) which controls operation of the secondary air circuit.

5. An internal combustion engine as claimed in any preceding claim, wherein the EGR circuit (36) includes a pipe for connection to the engine air intake (14), an EGR valve (38) and a pipe (42) for communicating with the secondary air inlets, which pipe is connected by a releasable connection (50) to the secondary air inlet (32).

6. An internal combustion engine as claimed in any preceding claim, wherein a constriction (52) is provided in the exhaust gas passage upstream of the EGR valve (38), and pressure tappings (54,56) on either side of the constriction are provided to monitor the flow of air through the EGR passage.
